# EUROPÄISCHE PATENTSCHRIFT

(11) **EP 0 401 866 B1**
(45) Veröffentlichungstag und Bekanntmachung des Hinweises auf die Patenterteilung: **08.03.1995**
(21) Anmeldenummer: 90111060.1
(22) Anmeldetag: 03.11.1987
(51) Int. Cl.: B05C 5/04, B29B 13/02

(54) **Vorrichtung zum Auftragen von flüssigen, pastösen oder plastischen Substanzen auf ein Substrat**
Device for applying liquid, pasty or plastic substances to a substrate
Dispositif pour appliquer des matières fondues, pâteuses ou plastiques sur un substrat

(30) Priorität: 10.11.1986 DE 3638307
(43) Veröffentlichungstag der Anmeldung: 12.12.1990
(62) Teilanmeldung aus: 87907592.7
(73) Patentinhaber: Ludwig, Volker, D-79793 Wutöschingen (DE)
(72) Erfinder: Ludwig, Volker, D-79793 Wutöschingen (DE)
(74) Vertreter: Weiss, Peter, Dr. rer. nat.

(56) Entgegenhaltungen:
- US-A- 2 253 176
- US-A- 2 868 420
- US-A- 4 121 535
- US-A- 4 154 377
- US-A- 4 641 764

## Beschreibung

Die Erfindung betrifft eine Vorrichtung zum Auftragen von flüssigen, pastösen oder plastischen Substanzen, insbesondere von Thermoplasten auf ein Substrat mit einem Schmelzbehälter, in dessen Innenraum axial Wärmetauscherflächen zum Aufschmelzen dieser Substanzen angeordnet sind, einem mit mit dem Druckbehälter verbundenen dem Schmelzbehälter verbundenen Druckbehälter und einem Beschickungskopf zum Übertragen der aufgeschmolzenen Substanz auf das Substrat über mindestens einen Düsenmund.

Derartige Vorrichtungen werden beispielsweise in der Fixiereinlagentechnik benutzt, wobei ein thermoplastischer Klebstoff auf ein textiles Substrat aufgetragen und dieses textile Substrat mit einem weiteren Substrat verbunden wird.

Solche Vorrichtungen werden aber auch beim Übertragen von Substanzen auf Papier od. dgl. Trägersubstrate verwendet.

Bei einem anderen üblichen Verfahren wird die Substanz stückig oder als Granulat angeliefert und muß vor dem Auftragen aufgeschmolzen werden. Dies geschieht meist in einem getrennten Behälter, aus dem dann die aufgeschmolzene Substanz über eine Pumpe zu dem Beschickungskopf gebracht wird. Diese Pumpe hat sich insofern als ungünstig erwiesen, als durch sie hochmolekulare Ketten, aus denen in der Regel die Substanzen bestehen, zerstört werden. Ferner nimmt das Aufschmelzen erhebliche Zeit in Anspruch, da meist der gesamte Inhalt des Schmelzbehälters erst in fließfähigen Zustand versetzt werden muß, bevor mit dem Austragen begonnen wird.

Aus der US-A-2 253 176 ist beispielsweise ein Verfahren zum Herstellen eines Garnes, Filamentes od. dgl. bekannt. Hierzu wird eine organische Kunststoffmischung verwendet, welche die Angewohnheit hat, daß ihre chemische Zusammensetzung sich während dem aufgeschmolzenen Zustand verändert. Stücke einer organischen Kunststoffsubstanz werden in einen Behälter gegeben, in dem sich eine Wärmetauscherflächen befindet. Dort schmelzen die festen Stücke und tropfen nach unten. Dieses Aufschmelzen nimmt eine erhebliche Zeit in Anspruch, da nur immer der Bereich, der mit der Wärmetauscherfläche in Kontakt ist, aufgeschmolzen wird.

Auch aus der US-A-2 868 420 ist eine Vorrichtung bekannt, bei der ein Raum durch einen perphorierten Boden von einem Aufnahmeraum abgetrennt, in welchem sich ein Heizelement befinden kann. Durch die Wärmeentwicklung dieser Heizelemente schmilzt die Substanz, welche sich in einem Behälter in dem ersten Raum befindet und tropft durch die Löcher im Boden in den Aufnahmeraum. Von dort gelangt dann die aufgeschmolzene Substanz über entsprechende Ventileinrichtungen in einen darunter liegenden Druckraum. Dieser Druckraum kann unter Druck gesetzt werden, wobei sich die Ventile zum Aufnahmeraum schließen und zu einem Auslaß hin öffnen. Auch hier stellt sich das erhebliche Problem, daß zum Aufschmelzen der Substanz nur wenige Wärmetauscherflächen zur Verfügung stehen. Hierdurch wird das Aufschmelzen verlangsamt, so daß es zu erheblichen Störungen des Prozeßablaufes kommt. Deshalb ist eine derartige Vorrichtung nur bedingt zur Beschickung eines Beschickungskopfes geeignet.

Der Erfinder hat sich zum Ziel gesetzt, eine Vorrichtung der o.g. Art zu entwickeln, in welcher die aufzutragenden Substanzen leicht erschmolzen und aus welcher die Substanzen ohne Pumpe ausgetragen werden können.

Zur Lösung dieser Aufgabe führt, daß die Wärmetauscherflächen auf einen Raum folgen, in dem die aufzuschmelzenden Substanzen einfüllbar und in dem sie unter überdruck setzbar sind.

Wird in den Raum oberhalb der Wärmetauscherflächen die aufzuschmelzende Substanz eingefüllt, so kann der aufgeschmolzene Teil der Substanz an den Wärmetauscherflächen, vorzugsweise an Wärmetauscherrohren entlangfließen und sich in einem Raum unterhalb der Wärmetauscherrohre ansammeln. Die Wärmetauscherrohre sind an einen Vorlauf und einen Rücklauf für einen Wärmeträger angeschlossen, wobei als Wärmeträger bevorzugt Thermalöl Anwendung finden soll.

Damit die Substanz nicht unaufgeschmolzen an den Wärmetauscherrohren vorbeigleiten kann, sollte oberhalb der Wärmetauscherrohren oder auch unterhalb ein Gitter angeordnet sein. Für als Granulat vorliegende Substanzen kann es sogar notwendig sein, den Wärmetauscherrohren eine Folie aus gleichem Material wie die aufzuschmelzende Substanz aufzulegen. Um ein Durchschlagen des Druckes durch die aufzuschmelzenden Substanzen hindurch zu verhindern, wird es in der Regel notwendig sein, den Druck in einer Druckblase zu sammeln, die dann auf die Substanzen wirkt. Diese Druckblase kann aus einem einfachen Foliensack bestehen, der an eine Druckleitung angeschlossen ist.

Die Durchflußgeschwindigkeit der aufgeschmolzenen Substanz durch die Wärmetauscherrohre kann einmal durch die zugeführte Wärme, andererseits aber auch durch den Druck geregelt werden. Ferner ist es möglich, den Raum unterhalb der Wärmetauscherrohre mit Druck aufzufüllen, so daß die aufgeschmolzenen Substanzen durch den Gegendruck verlangsamt werden. All dies ist über entsprechende Kontrolleinrichtungen steuerbar.

Auch der Schmelzbehälter selbst soll aufgeheizt werden können. Hierzu besteht er aus einer Innenwand und einer Außenwand, welche zwischen sich einen Mantelraum zur Aufnahme eines Wärmeträgers bilden, der wiederum bevorzugt Thermalöl ist. Außerdem sitzt der Schmelzbehälter in einer Isolierschicht.

Auch der Druckbehälter besteht aus einem doppelwandigen Silo, das von einem Isoliermantel umgeben ist. In den Mantelraum des doppelwandigen Silos mündet ebenfalls ein Vorlauf für einen Wärmeträger ein, der wiederum über einen Rücklauf zurückgeführt werden kann. Durch entsprechenden Druckausgleich zwischen Schmelzbehälter und Druckbehälter wird die aufgeschmolzene Substanz in den Druckbehälter gefördert und dieser kann unabhängig von einem Druck im Schmelzbehälter mit Druck zum Weiterfürhren der Substanz zu dem Beschickungskopf beaufschlagt werden.

Dadurch ist es möglich, unabhängig von der Tätigkeit des Schmelzbehälters in dem Druckbehälter einen Druck, vorzugsweise unter Inertgas, aufrecht zu erhalten, mit welchem die Substanz zum Beschickungskopf transportiert wird. Pumpen od. dgl. Transportmittel erübrigen sich. Eine kontinuierliche Beschickung des Beschickungskopfes ist gewährleistet.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur eine schematische Darstellung einer erfindungsgemäßen Vorrichtung zum Auftragen von flüssigen, plastischen oder pastösen Substanzen auf ein Substrat, teilweise als Blockschaltbild, teilweise im Querschnitt dargestellt.

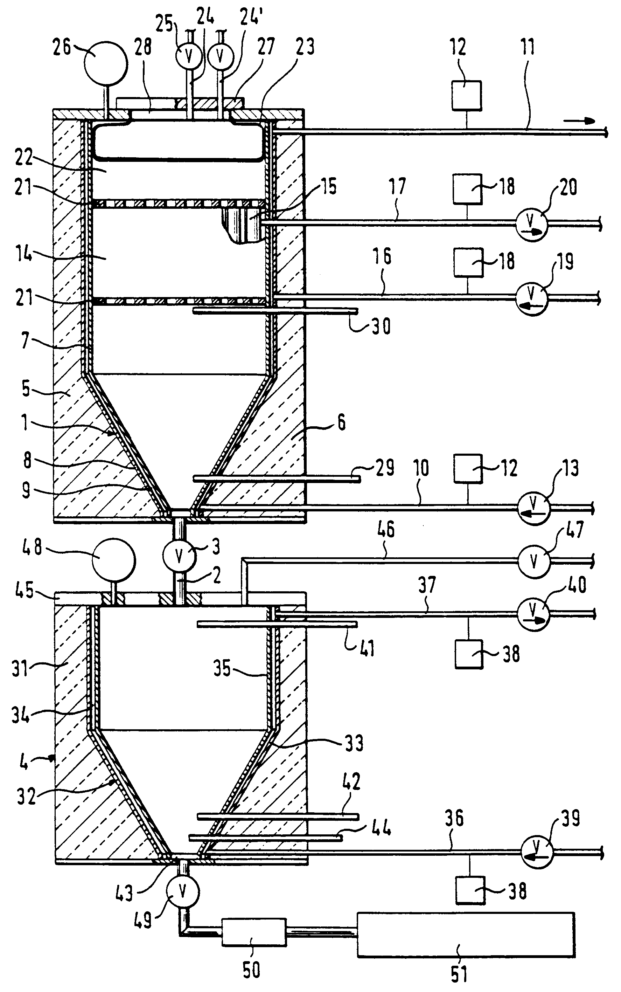

Gemäß Fig. 1 ist in einer Vorrichtung zum Auftragen von flüssigen, plastischen oder pastösen Substanzen auf ein nicht näher gezeigtes Substrat ein Schmelzbehälter 1 vorgesehen, der über eine Leitung 2, in welche ein Absperrventil 3 eingeschaltet ist, mit einem Druckbehälter 4 verbunden. Der Schmelzbehälter 1 besteht im wesentlichen aus einem von einer Isolierschicht 5 umgebenen doppelwandigen Aufnahmebehälter 6, der nach unten hin trichterförmig zur Leitung 2 hin verläuft.

Innenwand 7 und Außenwand 8 des Aufnahmebehälters 6 bilden einen Mantelraum 9, welcher mit einem Wärmeträger, beispielsweise einem aufgeheizten Thermalöl beaufschlagbar ist. Für diesen Wärmeträger ist ein Vorlauf 10 und ein Rücklauf 11 in bzw. aus dem Mantelraum 9 vorgesehen. Vorlauf 10 und Rücklauf 11 werden jeweils von einem Thermometer 12 überwacht. Zusätzlich ist in die Vorlaufleitung 10 noch ein Regelventil 13 eingeschaltet.

In den Bereich 14 des Aufnahmebehälters 6 sind oberhalb dessen trichterförmigen Auslaufs, in der Figur nur angedeutet, Wärmetauscherrohre 15 im Bündel angeordnet.

Die Versorgung der Wärmetauscherrohre mit einem weiteren Wärmeträger geschieht wiederum über einen Vorlauf 16 und einen Rücklauf 17, wobei sowohl Vorlauf 16 wie auch Rücklauf 17 von Thermometern 18 überwacht und durch ein Regelventil 19 bzw. Absperrventil 20 steuerbar sind.

Der Bereich 14 mit den Wärmetauscherrohren 15 wird durch ein Gitter 21 von einem Raum 22 abgetrennt, in welchen aufzuschmelzende Substanzen einfüllbar sind. Sollte beispielsweise eine granulierte Substanz aufgeschmolzen werden, welche zwischen den Wärmetauscherrohren 15 hindurchfallen könnte, so erweist es sich in der Praxis als günstig, das Gitter 21 zum Raum 22 hin mit einer Folie des gleichen Materials, wie das aufzuschmelzende Material, zu belegen. Auch unterhalb des Bereichs 14 kann ein Gitter 21 vorgesehen sein.

Im übrigen ist der Raum 22 teilweise mit einer Druckblase 23 gefüllt, welche beispielsweise aus Folienmaterial hergestellt sein kann. Diese Druckblase 23 ist mit einem Druckmedium, beispielsweise einem Gas, über eine Leitung 24 füllbar, wobei die Steuerung des Druckmediums durch ein weiteres Absperrventil 25 vorgenommen werden kann. Diese Druckblase 23 verhindert ein Durchbrechen des Druckmediums bei noch nicht aufgeschmolzenem Material, welches keine gasundurchlässige Oberfläche bildet. Der Druck in dem Raum 22 wird im übrigen über ein Manometer 26 gemessen.

Die Druckblase 23 kann an einem Deckel 27 angeschlossen sein, welcher eine Einfüllöffnung 28 für die aufzuschmelzenden Substanzen schließt.

Der Deckel 27 weist noch einen weiteren Anschluß 24′ zum Einführen eines Inert- oder Reaktionsgases außerhalb der Druckblase 23 auf, durch das auch die Oxidation der aufzuschmelzenden Substanz verhindert wird.

Das Niveau des unterhalb der Wärmetauscherrohre 15 sich sammelnden aufgeschmolzenen Materials wird durch zwei, nur schematisch angedeutete Niveauanzeigen 29 und 30 bestimmt.

Auch der Druckbehälter 4 besteht aus einem von einem Isoliermantel 31 umgebenen Silo 32, dessen Wandung doppelt ausgebildet ist. Ein Außenmantel 33 umfängt unter Ausbildung eines Mantelraumes 34 einen Innenmantel 35. In den Mantelraum 34 mündet ein Vorlauf 36 und ein Rücklauf 37 für einen Wärmeträger, wobei die jeweilige Temperatur wiederum über Thermometer 38 meßbar und über Regel- bzw. Absperrventile 39 bzw. 40 steuerbar ist.

Das Niveau der aus der Leitung 2 von dem Schmelzbehälter 1 eingeführten aufgeschmolzenen Substanzen wird über Niveauanzeigen 41 und 42 bestimmt. Zusätzlich wird nahe dem Siloauslauf 43 die Temperatur der aufgeschmolzenen Substanzen durch ein weiteres Thermometer 44 bestimmt.

Der Druckbehälter 4 ist von einem Deckel 45 abgedeckt, wobei durch diesen Deckel 45 eine Leitung 46 zum Einführen eines Druckmediums, vorzugsweise eines Inertgases, in das Silo 32 einmündet.

Zu dessen Regelung ist wiederum ein Absperrventil 47 vorgesehen. Der Druck selbst wird über ein Manometer 48 bestimmt.

Auf den Siloauslauf 43 folgt ein Ventil 49 sowie ein Filter 50 zum Filtern des zu einem Beschickungskopf 51 zu transportierenden Materials. Aus diesem Beschickungskopf 51 wird das Material beispielsweise über eine Breitschlitzdüse auf ein zu beschichtendes Substrat aufgebracht.

Dieser erfindungsgemäße Teil der Vorrichtung arbeitet wie folgt:
Sowohl in den Mantelraum 9 von dem Schmelzbehälter 1 wie auch in den Mantelraum 34 von dem Druckbehälter 4 wird über den Vorlauf 10 bzw. 36 ein Wärmeträger eingebracht. Die für den Schmelzvorgang gewünschte Temperatur ist dann erreicht, wenn sowohl Vor- wie auch Rücklauf 10 bzw. 11 etwa 10 Minuten lang eine gleiche Temperatur zeigen. Zum gleichen Zeitpunkt erfolgt auch ein Aufheizen der Wärmetauscherrohre 15 über den Vorlauf 16.

Nun wird über die Einfüllöffnung 28 eine aufzuschmelzende Substanz in den Raum 22 eingefüllt, die Druckblase 23 eingelegt und der Deckel 27 geschlossen. Danach wird die Druckblase 23 über die Leitung 24 und der Raum 22 über die Leitung 24′ mit Druckmedium beaufschlagt, wobei die Druckblase 23 als Stempel für die aufzuschmelzende Substanz wirkt.

Durch den innigen Kontakt mit den Wärmetauscherrohren 15 bzw. dem Gitter 21 und der aufgeheizten Innenwandung 7 beginnt die Substanz aufzuschmelzen, wobei sie in diesem Zustand zwischen den Wärmetauscherrohren hindurch läuft. Dabei kann im übrigen eine einfache Regelung der Durchflußgeschwindigkeit über den Druck der Druckblase 23 und/oder über die Regulierung der Temperatur in den Wärmetauscherrohren 15 erfolgen. Ist die Temperatur zu gering, kann dies in bestimmtem Ausmaß durch Erhöhung des Druckes in der Druckblase ausgeglichen werden. Ist die Temperatur zu hoch, wird der Druck in der Druckblase 23 verringert.

Im übrigen ist es auch denkbar, daß in dem Raum unterhalb der Wärmetauscherrohre 15 ein bestimmter Gegendruck aufgebaut wird, über den ebenfalls eine Regulierung der Durchflußgeschwindigkeit des aufgeschmolzenen Materials erfolgen kann.

Die Niveauanzeiger 29 bzw. 30 zeigen an, wenn genügend aufgeschmolzene Substanz durch die Wärmetauscherrohre 15 gelangt ist. Jetzt kann diese aufgeschmolzene Substanz in den Druckbehälter 4 gefahren werden. Hierzu erfolgt vorab ein Druckausgleich zwischen Schmelzbehälter 1 und Druckbehälter 4, d. h. der Druck im Schmelzbehälter 1 wird auf den Druck im Druckbehälter 4 gebracht. Danach wird das Absperrventil 3 geöffnet und der Druck im Schmelzbehälter 1 erhöht.

Durch den erhöhten Druck im Schmelzbehälter 1 wird die aufgeschmolzene Substanz über die Leitung 2 in den Druckbehälter 4 bzw. das Silo 32 gefördert. Es versteht sich von selbst, daß hier nicht gezeigte Sicherheitsventile zum Entweichenlassen von überschüssigem Druckmedium vorgesehen sind.

Sobald aufgeschmolzene Substanz benötigt wird, erfolgt ein Öffnen des Ventils 49 und die Substanz fließt unter dem Druck im Druckbehälter 4 durch das Filter 50 zum Beschickungskopf 51, wie dieser beispielsweise in der WO 88/03442 aufgezeigt ist.

Dadurch daß der Druckbehälter immer unter Druck steht, findet ein kontinuierliches Beschicken des Beschickungskopfes 51 statt, auch wenn der Druckbehälter gerade befüllbar wird.

## Patentansprüche

1. Vorrichtung zum Auftragen von flüssigen, pastösen oder plastischen Substanzen, insbesondere von Thermoplasten, auf ein Substrat mit einem Schmelzbehälter (1), in dessen Innenraum axial Wärmetauscherflächen zum Aufschmelzen dieser Substanzen angeordnet sind, einem mit dem Schmelzbehälter (1) verbundenen Druckbehälter (4) und einem mit dem Druckbehälter (4) verbundenen Beschickungskopf zum Übertragen der aufgeschmolzenen Substanzen auf das Substrat über mindestens einen Düsenmund,
dadurch gekennzeichnet,
daß die Wärmetauscherflächen auf einen Raum (22) folgen, in dem die aufzuschmelzenden Substanzen einfüllbar und in dem sie unter überdruck setzbar sind.

2. Vorrichtung nach Anspruch 1, dadurch gekennzeichnet, daß die Wärmetauscherflächen zum Raum (22) hin mit einem Gitter (21) abgedeckt sind.

3. Vorrichtung nach Anspruch 1 oder 2, dadurch gekennzeichnet, daß zum Aufschmelzen von insbesondere als Granulat vorliegenden Substanzen auf die Wärmetauscherflächen eine Folie aus gleichem Material wie die aufzuschmelzende Substanz aufgelegt ist.

4. Vorrichtung nach einem der Ansprüche 1 bis 3, dadurch gekennzeichnet, daß in den Raum (22) eine Druckblase (23) eingesetzt ist.

5. Vorrichtung nach Anspruch 4, dadurch gekennzeichnet, daß die Druckblase (23) aus einem Foliensack besteht und an eine Druckleitung (24) angeschlossen ist.

6. Vorrichtung nach wenigstens einem der Ansprüche 1 bis 5, dadurch gekennzeichnet, daß der Raum unterhalb der Wärmetauscherflächen mit Druck beaufschlagbar ist.

7. Vorrichtung nach wenigstens einem der Ansprüche 1 bis 6, dadurch gekennzeichnet, daß der Schmelzbehälter (1) aus einem von einer Isolierschicht (5) umgebenen Aufnahmebehälter (6) besteht, der aus einer Innenwand (7) und einer Außenwand (8) zusammengesetzt ist, welche zwischen sich einen Mantelraum (9) zur Aufnahme eines Wärmeträgers bilden.

8. Vorrichtung nach Anspruch 7, dadurch gekennzeichnet, daß als Wärmeträger ein Thermalöl über einen Vorlauf (10) in und über einen Rücklauf (11) aus dem Mantelraum (9) geführt ist.

9. Vorrichtung nach wenigstens einem der Ansprüche 1 bis 8, dadurch gekennzeichnet, daß der Druckbehälter (4) aus einem doppelwandigen Silo (32) besteht, das von einem Isoliermantel (31) umgeben ist.

10. Vorrichtung nach Anspruch 9, dadurch gekennzeichnet, daß das Silo (32) aus einem Innenmantel (35) und einem Außenmantel (33) besteht, zwischen denen ein Mantelraum (34) an einen Vorlauf (36) und einen Rücklauf (37) für einen Wärmeträger angeschlossen ist.

11. Vorrichtung nach wenigstens einem der Ansprüche 1 bis 10, dadurch gekennzeichnet, daß als Wärmeträger für die Wärmetauscherflächen ein Thermalöl Anwendung findet.

12. Vorrichtung nach wenigstens einem der Ansprüche 1 bis 11, dadurch gekennzeichnet, daß die Wärmetauscherflächen als Wärmetauscherrohre (15) ausgebildet sind.

## Claims

1. Apparatus for applying liquid, pasty or plastic substances, in particular thermoplastics, to a substrate with a melt container (1) in whose interior axial heat exchanger surfaces for the melting of these substances are arranged, a pressure container (4) connected to the melt container (1) and a feed head connected to the pressure container (4) for transfering the melted substances to the substrate via at least one nozzle orifice, characterised in that the heat exchanger surfaces follow a chamber (22) in which the substances to be melted may be introduced and in which they may be subjected to excess pressure.

2. Apparatus according to claim 1, characterised in that the heat exchanger surfaces are covered toward the chamber (22) with a grating (21).

3. Apparatus according to claim 1 or 2, characterised in that for melting substances existing, in particular, as a granulate, a film of the same material as the substance to be melted is applied to the heat exchanger surfaces.

4. Apparatus according to one of claims 1 to 3, characterised in that a pressure bubble (23) is inserted into the chamber (22).

5. Apparatus according to Claim 4, characterised in that the pressure bubble (23) consists of a film bag and is attached to a pressure pipe (24).

6. Apparatus according to at least one of Claims 1 to 5, characterised in that the chamber may be loaded with pressure beneath the heat exchanger surfaces.

7. Apparatus according to at least one of Claims 1 to 6, characterised in that the melt container (1) consists of a receiver (6) which is surrounded by an insulating layer (5) and is composed of an inner wall (7) and an outer wall (8) which form between them a circumferential chamber (9) for receiving a heat carrier.

8. Apparatus according to Claim 7, characterised in that, as heat carrier, a thermal oil is guided via a feed pipe (10) into the circumferential chamber (9) and via a return pipe (11) from the circumferential chamber (9).

9. Apparatus according to at least one of Claims 1 to 8, characterised in that the pressure container (4) consists of a double-walled silo (32) which is surrounded by an insulating casing (31).

10. Apparatus according to Claim 9, characterised in that the silo (32) consists of an inner casing (35) and an outer casing (33) between which a circumferential chamber (34) is connected to a feed pipe (36) and a return pipe (37) for a heat carrier.

11. Apparatus according to at least one of Claims 1 to 10, characterised in that a thermal oil is used as heat carrier for the heat exchanger surfaces.

12. Apparatus according to at least one of Claims 1 to 11, characterised in that the heat exchanger surfaces are designed as heat exchanger pipes (15).

## Revendications

1. Dispositif pour appliquer des produits liquides, pâteux ou plastiques notamment des matières thermoplastiques sur un support à l'aide d'un réceptacle de produits fondus (1) dont le volume intérieur comporte des surfaces d'échange de chaleur, axiales pour faire fondre ces produits, et un réservoir de pression (4) relié au réservoir de fusion (1) et une tête d'alimentation reliée au réservoir de pression (4) pour transférer les produits fondus au substrat par au moins une embouchure de buse,
caractérisé en ce que les surfaces d'échange de chaleur sont à la suite d'une chambre (22) susceptible de recevoir les substances fondues et de mettre celles-ci en pression.

2. Dispositif selon la revendication 1, caractérisé en ce que les surfaces d'échange de chaleur sont recouvertes par une grille (21) en direction de la chambre (22).

3. Dispositif selon la revendication 1 ou 2, caractérisé en ce que pour fondre notamment les substances à l'état de granulés sur les surfaces d'échange de chaleur, on utilise une feuille de même matériau que celle de la substance à fondre.

4. Dispositif selon l'une des revendications 1 à 3, caractérisé en ce qu'une poche de pression (23) est logée dans la chambre (22).

5. Dispositif selon la revendication 4, caractérisé en ce que la chambre de pression (23) se compose d'un sac formé d'une feuille auquel est reliée une conduite de pression (24).

6. Dispositif selon au moins l'une des revendications 1 à 5, caractérisé en ce que la chambre sous les surfaces d'échange de chaleur, est susceptible d'être alimentée en pression.

7. Dispositif selon au moins l'une des revendications 1 à 6, caractérisé en ce que le réceptacle de produits fondus (1) consiste en un réservoir de réception (6) entouré d'une couche isolante (5), le réservoir (6) étant composé d'une paroi intérieure (7) et d'une paroi extérieure (8) qui forment entre elles une chemise (9) pour recevoir un moyen caloporteur.

8. Dispositif selon la revendication 7, caractérisé en ce que le moyen caloporteur est une huile thermique qui arrive par une alimentation (10) dans la chemise (9) et en sort par un retour (11).

9. Dispositif selon au moins l'une des revendications 1 à 8, caractérisé en ce que le réservoir de pression (4) se compose d'un silo (32) à double parois entouré d'une enveloppe isolante (31).

10. Dispositif selon la revendication 9, caractérisé en ce que le silo (32) se compose d'une enveloppe intérieure (35) et d'une enveloppe extérieure (33) entre lesquelles il y a la chemise (34) reliée à une alimentation (36) et à un retour (37) du moyen caloporteur.

11. Dispositif selon au moins l'une des revendications 1 à 10, caractérisé en ce que le moyen caloporteur pour les surfaces d'échangeur de chaleur, est une huile thermique.

12. Dispositif selon au moins l'une des revendications 1 à 11, caractérisé en ce que les surfaces d'échange de chaleur sont réalisées sous la forme de tubes échangeurs de chaleur (15).
